# EUROPÄISCHE PATENTSCHRIFT

(11) **EP 3 867 937 B1**
(45) Veröffentlichungstag und Bekanntmachung des Hinweises auf die Patenterteilung: **19.07.2023**
(21) Anmeldenummer: 19812705.2
(22) Anmeldetag: 15.11.2019
(51) Int. Cl.: H01H 3/30, H01H 9/54, H02K 11/05, H02K 11/33, H01H 3/26, H02P 7/06

(54) **MOTORVORRICHTUNG FÜR EINEN SCHALTERANTRIEB EINES ELEKTRISCHEN SCHALTERS**
MOTOR APPARATUS FOR A SWITCH DRIVE OF AN ELECTRIC SWITCH
DISPOSITIF MOTEUR POUR UNE COMMANDE DU COMMUTATEUR D'UN COMMUTATEUR ÉLECTRIQUE

(30) Priorität: 13.12.2018 DE 102018221667
(43) Veröffentlichungstag der Anmeldung: 25.08.2021
(73) Patentinhaber: Siemens Energy Global GmbH & Co. KG, 81739 München (DE)
(72) Erfinder: HILKER, Thomas, 14532 Stahnsdorf (DE); JÄNICKE, Lutz-Rüdiger, 15831 Mahlow (DE)
(86) Internationale Anmeldenummer: PCT/EP2019/081485
(87) Internationale Veröffentlichungsnummer: WO 2020/120069

(56) Entgegenhaltungen:
- EP-A1- 0 720 193
- EP-A1- 3 258 579
- WO-A1-2018/054672
- WO-A1-2018/205101
- DE-A1-102016 210 466

## Beschreibung

Die Erfindung betrifft eine Motorvorrichtung für einen Schalterantrieb eines elektrischen Schalters, mit einem Elektromotor und einer Steuerungsvorrichtung zur Steuerung des Elektromotors, wobei die Steuerungsvorrichtung
eine Energieversorgungseinrichtung zur elektrischen Energieversorgung des Elektromotors, mit
   - einer Gleichrichtereinheit,
   - einer Spannungsmesseinheit zur Erfassung der Versorgungsspannung oder einer Gleichrichter-Ausgangsspannung der Gleichrichtereinheit und
   - einer Schalteinheit zur Erzeugung einer Antriebsspannung für den Elektromotor aus der Versorgungsspannung oder aus der Gleichrichter-Ausgangsspannung und
eine Steuereinheit zur Ansteuerung der Schalteinheit in Abhängigkeit von der erfassten Versorgungs- oder Gleichrichter-Ausgangsspannung aufweist.

Elektrische Schalter zum Schließen oder Öffnen von Strompfaden mittlerer und hoher elektrischer Spannungen und Ströme benötigen zum Bewegen von Schaltkontakten der Schalter große mechanische Energie.

Beispielsweise werden zum Bewegen der Schaltkontakte von Leistungsschaltern oft Schalterantriebe verwendet, die mechanische Energie speichern, beispielsweise Federspeicherantriebe. In einem Federspeicherantrieb wird eine Feder, beispielsweise eine Schraubenfeder, oft mittels eines Elektromotors über ein Getriebe gespannt. Die Feder wird gegen ein selbständiges Entspannen verriegelt, so dass die Energie in der Feder gespeichert bleibt. Durch eine Auslösevorrichtung kann die gespeicherte Energie freigegeben werden, indem die Verriegelung der Feder gelöst wird, so dass sich die Feder entspannt. Mit der verfügbaren gespeicherten Energie kann somit eine Schalthandlung ausgeführt werden.

Anders als Leistungsschalter bewirken Trennschalter eine definierte Unterbrechung annähernd lastfreier elektrischer Stromkreise, indem Schaltkontakte direkt, beispielsweise von einem Motor, angetrieben werden. Auf eine Speicherung von Energie wird dabei verzichtet, da eine lastfreie (leistungslose) Trennung der Schaltkontakte langsamer erfolgen kann.

Die elektrischen Versorgungsspannungen von Elektromotoren für Schalterantriebe elektrischer Schalter sind durch normative Vorgaben und Anwendungsanforderungen vielfältig und unterscheiden sich neben der Spannungshöhe auch in der Spannungsform, die beispielsweise eine ein- oder dreiphasige Wechselspannung oder eine Gleichspannung sein kann. Daher werden für Schalterantriebe elektrischer Schalter unterschiedliche Motortypen und -ausführungen eingesetzt. Ansteuerungs-, Absicherungs-, Verriegelungs- und Überwachungsfunktionen für die Motoren werden durch eine Vielzahl von Bauteil- und Verdrahtungsvarianten realisiert. Die Bauteil- und Verdrahtungsvarianz erhöht die Kosten und die Fehlerrate der Installation der Motoren.

Die Druckschrift DE 10 2016 218 334 A1 zeigt eine Motorvorrichtung für einen Schalterantrieb eines zuvor beschriebenen elektrischen Schalters. Die Motorvorrichtung umfasst einen bürstenlosen Elektromotor und eine elektronische Steuerungsvorrichtung zur Steuerung des Elektromotors, die Steuerungsvorrichtung umfasst ihrerseits: (i) eine Gleichrichtereinheit zum Gleichrichten einer Versorgungsspannung der Motorvorrichtung, wenn die Versorgungsspannung eine Wechselspannung ist, und zum Verpolungsschutz, wenn die Versorgungsspannung eine Gleichspannung ist, (ii) eine Spannungsmesseinheit zur Erfassung einer Gleichrichter-Ausgangsspannung der Gleichrichtereinheit, (iii) eine Schalteinheit zur Erzeugung einer pulsweiten-modulierten Antriebswechselspannung für den Elektromotor aus der Gleichrichter-Ausgangsspannung der Gleichrichtereinheit und (iv) eine Steuereinheit zur Ansteuerung der Schalteinheit in Abhängigkeit von der erfassten Gleichrichter-Ausgangsspannung. Aus der WO 2018/054672 A1 und der DE 10 2016 210466 A1 sind ebenfalls Motorvorrichtungen für einen Schalterantrieb eines elektrischen Schalters bekannt.

Der Erfindung liegt die Aufgabe zugrunde, eine Motorvorrichtung für einen Schalterantrieb eines elektrischen Schalters anzugeben, die kompakt und einfach handhabbar ist.

Die Aufgabe wird erfindungsgemäß durch die Merkmale des Anspruchs 1 gelöst.

Vorteilhafte Ausgestaltungen der Erfindung sind Gegenstand der Unteransprüche.

Bei der erfindungsgemäßen Motorvorrichtung für einen Schalterantrieb eines elektrischen Schalters, welche einen Elektromotor und eine Steuerungsvorrichtung zur Steuerung des Elektromotors umfasst, bei der diese Steuerungsvorrichtung ihrerseits eine Energieversorgungseinrichtung zur elektrischen Energieversorgung des Elektromotors, mit (a) einer Gleichrichtereinheit, (b) einer Spannungsmesseinheit zur Erfassung der Versorgungsspannung oder einer Gleichrichter-Ausgangsspannung der Gleichrichtereinheit und (c) einer Schalteinheit zur Erzeugung einer Antriebsspannung für den Elektromotor aus der Versorgungsspannung oder aus der Gleichrichter-Ausgangsspannung sowie eine Steuereinheit zur Ansteuerung der Schalteinheit in Abhängigkeit von der erfassten Versorgungs- oder Gleichrichter-Ausgangsspannung aufweist, ist vorgesehen, dass diese Motorvorrichtung weiterhin ein Motorgehäuse aufweist, welches neben dem Elektromotor zumindest einen Teil der Energieversorgungseinrichtung und/oder zumindest einen Teil der Steuereinheit einhaust. Es ergibt sich eine Kompakte Bauweise, bei der zumindest einige der Komponenten zu einem Modul zusammengefasst und gemeinsam per Motorgehäuse eingehaust sind. Bevorzugt sind dabei sowohl Elektromotor, als auch Energieversorgungseinrichtung und Steuereinheit vom Motorgehäuse eingehaust. Bei dem Elektromotor kann es sich sowohl um einen Gleichstrommotor als auch um einen Wechselstrommotor wie etwa einen Drehstrommotor handeln. Die hier genannten Alternativen beim Aufbau der Energieversorgungseinrichtung beziehen sich insbesondere auf einen Gleichstrommotor. Die Energieversorgungseinrichtung ist ein Art Netzteil für den Elektromotor.

Eine solche Motorvorrichtung kann vorteilhaft mit verschiedenen Versorgungsspannungen betrieben werden, wobei sich die Versorgungsspannungen hinsichtlich ihrer Amplitude und/oder Spannungsform unterscheiden können. Die Gleichrichtereinheit ermöglicht den wahlweisen Betrieb mit einer ein- oder mehrphasigen Versorgungswechselspannung und einer beliebig gepolten Versorgungsgleichspannung, indem sie eine Versorgungswechselspannung gleichrichtet und einen Verpolungsschutz für eine Versorgungsgleichspannung bereitstellt. Die Erzeugung einer Antriebsgleichspannung für den Elektromotor aus der vorgegebenen Versorgungsspannung ermöglicht, die Antriebsgleichspannung für den Elektromotor an die jeweilige Versorgungsspannung und an die Anforderungen der anzutreibenden Bauteile anzupassen. Dadurch wird eine weitgehende Unabhängigkeit der Motorvorrichtung von der Amplitude und Form der Versorgungsspannung und den anzutreibenden Bauteilen erreicht, sodass die Motorvorrichtung für Schalterantriebe verschiedener elektrischer Schalter eingesetzt werden kann, beispielsweise zum Spannen von Federn der Federspeicherantriebe von Leistungsschaltern oder zum direkten Antrieb von Schaltkontakten von Trennschaltern. Insbesondere kann die Anzahl von Motorvarianten für verschiedene Schalter vorteilhaft reduziert werden. Statt unterschiedlicher Elektromotoren wird für verschiedene Schalter ein mit Gleichstrom betreibbarer Elektromotor eingesetzt. Die Erfindung reduziert zudem vorteilhaft den Änderungsaufwand bei einer nachträglichen Anpassung der Versorgungsspannung. Fertigungstechnisch entfallen insbesondere die Montage und Verdrahtung unterschiedlicher elektrischer Komponenten zur Überwachung und Steuerung des Elektromotors. Durch die damit einhergehende Vereinheitlichung wird auch eine Fehlerwahrscheinlichkeit während dieser Fertigungsprozesse reduziert.

Gemäß der Erfindung ist die Energieversorgungseinrichtung eine Energieversorgungseinrichtung zur elektrischen Energieversorgung des Elektromotors und auch der Steuereinheit. Mit anderen Worten ist die Energieversorgungseinrichtung ein Art Netzteil für den Elektromotor und die Steuereinheit.

Gemäß der Erfindung weist die Energieversorgungseinrichtung zur elektrischen Energieversorgung der Steuereinheit eine weitere Spannungsmesseinheit zur Erfassung der Versorgungsspannung oder einer Gleichrichter-Ausgangsspannung der Gleichrichtereinheit sowie eine weitere Schalteinheit zur Erzeugung einer Versorgungsspannung für die Steuereinheit aus der Versorgungsspannung oder aus der Gleichrichter-Ausgangsspannung auf.

Insbesondere ist vorgesehen, dass die Schalteinheit und/oder die weitere Schalteinheit der Gleichrichtereinheit nachgeschaltet ist. Gleichrichtereinheit und Schalteinheit sind getrennt und es ergibt sich ein Zwischenkreis zwischen den beiden Einheiten. Die Spannungsmesseinheit erfasst in diesem Fall die Gleichrichter-Ausgangsspannung der Gleichrichtereinheit.

Alternativ weist die Gleichrichtereinheit die Schalteinheit auf. Gleichricht- und Schaltfunktion werden in einer Einheit, der Gleichrichtereinheit, ausgeführt. Dementsprechend erfasst die Spannungsmesseinheit in diesem Fall die Versorgungsspannung.

Dabei ist die Schalteinheit bevorzugt als vereinfachter Abwärtswandler ausgebildet oder umfasst einen vereinfachten Abwärtswandler. Der Abwärtswandler, auch Tiefsetzsteller, Abwärtsregler, englisch step-down converter oder buck converter, ist eine relativ einfache Form eines schaltenden Gleichspannungswandlers. Die Ausgangsspannung des Abwärtswandlers ist stets kleiner als der Betrag der Eingangsspannung des Abwärtswandlers.

Gemäß noch einer weiteren bevorzugten Ausführungsform der Erfindung weist die Steuerungsvorrichtung eine Strommesseinheit zur Erfassung eines zwischen der Schalteinheit und dem Elektromotor fließenden Motorstroms auf. Diese Ausgestaltung der Erfindung ermöglicht vorteilhaft eine Überwachung des Motorstroms, um Überlastungen und Fehlfunktionen des Elektromotors zu erkennen.

Eine Ausgestaltung der Erfindung sieht vor, dass die Steuerungsvorrichtung eine galvanische Trenneinheit zur galvanischen Trennung des Elektromotors von dem Rest der Steuerungsvorrichtung aufweist. Beispielsweise weist die galvanische Trenneinheit ein Relais oder ein Schütz zur galvanischen Trennung des Elektromotors von der Steuerungsvorrichtung auf. Diese Ausgestaltung der Erfindung ermöglicht vorteilhaft, den Elektromotor im Falle einer erkannten Überlastung oder Fehlfunktion sicher auszuschalten.

Eine weitere Ausgestaltung der Erfindung sieht vor, dass zumindest eines der leistungsübertragenden elektrischen Bauelemente der Steuerungsvorrichtung, insbesondere die galvanische Trenneinheit, wärmeleitend mit einer Komponente des Elektromotors und/oder einer Komponente des Motorgehäuses verbunden ist. Auf diese Weise wird die Wärme direkt aus dem Inneren des Gehäuses abgeleitet bzw. die entsprechende Komponente als Kühlelement genutzt.

Eine weitere Ausgestaltung der Erfindung sieht vor, dass die Steuereinheit eine Eingangsbaugruppe aufweist, über die der Steuereinheit Eingangssignale wenigstens eines externen Gerätes zuführbar sind oder zugeführt werden. Insbesondere werden der Steuereinheit über die Eingangsbaugruppe Eingangssignale eines Endlagenschalters zur Erfassung einer Endstellung des Schalterantriebs zugeführt. Diese Ausgestaltung der Erfindung ermöglicht vorteilhaft, mit der Steuereinheit für den Betrieb des jeweiligen Schalters relevante Eingangssignale zu verarbeiten. Beispielsweise kann die Steuerungsvorrichtung dadurch auf Eingangssignale wie Verriegelungsanforderungen zum Verriegeln des Schalterantriebs reagieren und den Elektromotor erforderlichenfalls abschalten. Eingangssignale eines Endlagenschalters zur Erfassung einer Endstellung des Schalterantriebs zur Schalteinheit ermöglichen insbesondere, mit der Steuereinheit eine Endstellung des Schalterantriebs zu überwachen.

Eine weitere Ausgestaltung der Erfindung sieht vor, dass die Steuereinheit eine Ausgangsbaugruppe aufweist, über die von der Steuereinheit Ausgangssignale an wenigstens ein externes Gerät abgegeben werden. Diese Ausgestaltung der Erfindung ermöglicht vorteilhaft, mit den Ausgangssignalen einen Zustand des Elektromotors und/oder der Steuerungsvorrichtung auszugeben und in anderen Baugruppen, beispielsweise in konventionellen elektrischen Steuerungsbauteilen, weiter zu verarbeiten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird. Dabei zeigt:

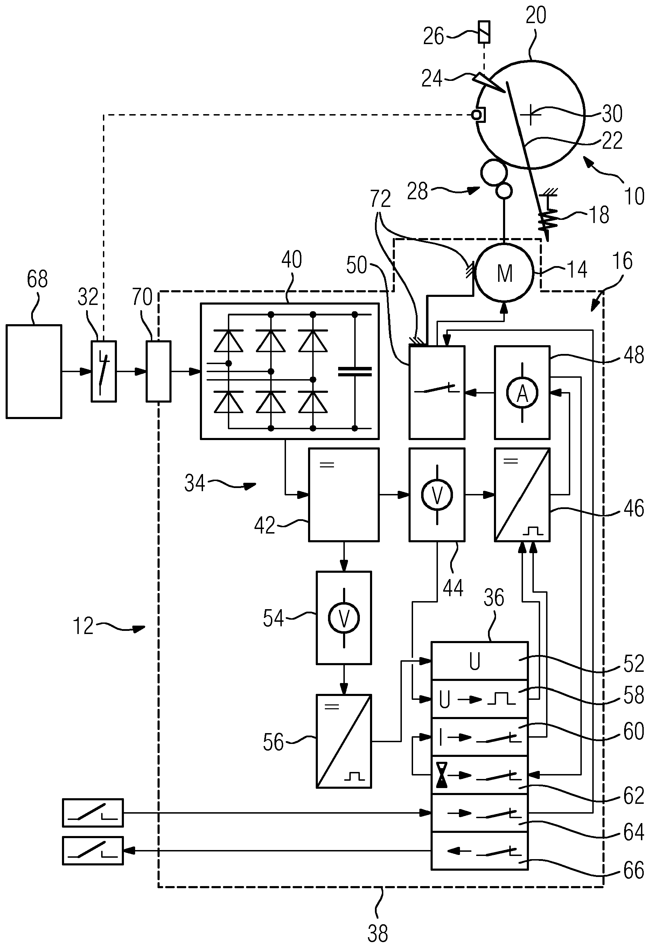

- Fig. 1: ein Blockdiagramm eines Schalterantriebs eines elektrischen Schalters und einer Motorvorrichtung gemäß einer Ausführungsform der Erfindung.

Fig. 1 zeigt ein Blockdiagramm eines Schalterantriebs 10 eines elektrischen Schalters und einer Motorvorrichtung 12 für diesen Schalterantrieb 10. Die Motorvorrichtung 12 weist einen Elektromotor 14 und eine elektronische Steuerungsvorrichtung 16 zur Steuerung dieses Elektromotors 14 auf. Der Schalterantrieb 10 ist im gezeigten Beispiel ein Federspeicherantrieb und weist eine Feder 18, ein Spannrad 20, ein die Feder 18 mit dem Spannrad 20 verbindendes Kopplungselement 22, eine Verriegelungseinheit 24 und eine Auslöseeinheit 26 auf. Der mit Elektromotor 14 kann ein Gleich- oder Wechselstrommotor sein. Im Folgenden wird er der Einfachheit halber kurz als Elektromotor 14 bezeichnet.

Der Elektromotor 14 ist durch ein Getriebe 28 an das Spannrad 20 gekoppelt, um das Spannrad 20 um eine Drehachse 30 in einer ersten Drehrichtung aus einer ersten Endstellung in eine zweite Endstellung zu drehen. Das Kopplungselement 22 ist als ein Kopplungsstab ausgeführt, der an einem Ende mit dem Spannrad 20 und an dem anderen Ende mit der Feder 18 verbunden ist, sodass die Feder 18 durch eine Drehung des Spannrades 20 um die Drehachse 30 in der ersten Drehrichtung gespannt wird.

Somit kann die Feder 18 durch den Elektromotor 14 gespannt werden. Durch die Verriegelungseinheit 24 kann das Spannrad 20 verriegelt werden, sodass eine Drehung des Spannrades 20 blockiert wird, um ein Entspannen der Feder 18 zu verhindern. Beispielsweise weist die Verriegelungseinheit 24 dazu einen Verriegelungsanker auf, der das Spannrad 20 und/oder das Kopplungselement 22 in der zweiten Endstellung, in der die Feder 18 gespannt ist, arretiert.

Durch die Auslöseeinheit 26 kann die Verriegelung des Spannrades 20 aufgehoben werden, um ein Entspannen der Feder 18 freizugeben. Durch das Entspannen der Feder 18 wird das Spannrad 20 aus der zweiten Endstellung in die erste Endstellung gedreht und ein (nicht dargestellter) Schaltkontakt des Schalters bewegt, um einen Strompfad zu unterbrechen. Durch einen Endlagenschalter 32 werden die Endstellungen des Spannrades 20 erfasst.

Die Steuerungsvorrichtung 16 weist eine als Netzteil ausgebildete Energieversorgungseinrichtung 34 sowie eine entsprechende Steuereinheit 36 auf. Der Elektromotor 14, die Energieversorgungseinrichtung 34 und die Steuereinheit 36 sind gemeinsam in einem Motorgehäuse 38 eingehaust. Die Energieversorgungseinrichtung 34 weist zur Energieversorgung des Elektromotors eine Gleichrichtereinheit 40, einen dieser Gleichrichtereinheit 40 nachgeschalteten Zwischenkreis 42, eine dem Zwischenkreis 42 nachgeschaltete Spannungsmesseinheit 44, eine der Spannungsmesseinheit 44 nachgeschaltete Schalteinheit 46, eine der Schalteinheit 46 nachgeschaltete Strommesseinheit 48 und eine der Strommesseinheit 48 nachgeschaltete galvanische Trenneinheit 50 zur galvanischen Trennung des Elektromotors 14 von der Steuerungsvorrichtung 16 auf. Die Gleichrichtereinheit 40 umfasst eine Gleichrichterschaltung und einen der Gleichrichterschaltung nachgeschalteten Kondensator auf, der als Zwischenkreiskondensator aufgefasst werden kann und den Eingang des entsprechenden Zwischenkreises 42 bildet, in dem die Spannungsmesseinheit 44 verschaltet ist. Die Energieversorgungseinrichtung 34 ist gleichzeitig jedoch auch eine Energieversorgungseinrichtung 34 zur Versorgung der Steuereinheit 36 mit elektrischer Energie über deren elektrischen Anschluss 52. Die Energieversorgungseinrichtung 34 weist zur elektrischen Energieversorgung der Steuereinheit 36 eine dem Zwischenkreis 42 nachgeschaltete weitere Spannungsmesseinheit 54 zur Erfassung der Gleichrichter-Ausgangsspannung der Gleichrichtereinheit 40 und eine der weiteren Spannungsmesseinheit 54 nachgeschaltete weitere Schalteinheit 56 zur Erzeugung einer Versorgungsspannung für die Steuereinheit 36 aus der Gleichrichter-Ausgangsspannung auf.

Die Steuereinheit 36 bildet eine Art Vorschaltgerät und weist eine Pulsweitenmodulationseinheit 58, eine Abschalteinheit 60, eine Zeit- und Stromüberwachungseinheit 62, eine Eingangsbaugruppe 64 und eine Ausgangsbaugruppe 66 auf. Die Steuereinheit 36 wird dabei bevorzugt von einem Mikrocontroller gebildet.

Die Gleichrichtereinheit 40 ist mit einer Versorgungsspannungsquelle 68 über einen Anschluss 70 für die Versorgungsspannung verbunden, von der die Motorvorrichtung 12 mit einer Versorgungsspannung versorgt wird. Die Versorgungsspannungsquelle 68 ist eine ein- oder mehrphasige Wechselspannungsquelle oder eine Gleichspannungsquelle.

Mittels der Gleichrichtereinheit 40 wird die Versorgungsspannung gleichgerichtet, wenn die Versorgungsspannung eine Wechselspannung ist, und ein Verpolungsschutz bereitgestellt, wenn die Versorgungsspannung eine Gleichspannung ist, sodass von der Gleichrichtereinheit 40 eine Gleichrichter-Ausgangsspannung ausgegeben wird, die eine Gleichspannung mit einer vorgegebenen Polarität ist. Eine von der vorgegebenen Polarität abweichende Polarität einer Versorgungsspannung, die eine Gleichspannung ist, oder eines Anteils einer Versorgungsspannung, die eine Wechselspannung ist, wird von der Gleichrichtereinheit 40 in die vorgegebene Polarität umgewandelt.

Mittels der Spannungsmesseinheit 44 wird eine Amplitude der Gleichrichter-Ausgangsspannung am Zwischenkreis 42 erfasst. Die Spannungsmesseinheit 44 ist eine elektrische oder elektronische Schaltung zur Spanungsermittlung und weist beispielsweise einen Spannungsteiler auf. In diesem Ausführungsbeispiel ist sie so verschaltet, dass sie die Amplitude der Gleichrichter-Ausgangsspannung (Zwischenkreisspannung am Zwischenkreis 42) ermittelt.

Mittels der Schalteinheit 46 wird aus der Gleichrichter-Ausgangsspannung/Zwischenkreisspannung eine pulsweitenmodulierte Antriebsspannung für den Elektromotor 14 erzeugt. Dazu wird die Schalteinheit 46 mittels der Steuereinheit 36 in Abhängigkeit von der mit der Spannungsmesseinheit 44 erfassten Amplitude der Gleichrichter-Ausgangsspannung angesteuert.

Mittels der Strommesseinheit 48 wird ein zwischen der Schalteinheit 46 und dem Elektromotor 14 fließender Motorstrom erfasst. Die Strommesseinheit 48 weist beispielsweise eine Wandlerspule oder einen Shunt-Widerstand auf.

Mittels der galvanischen Trenneinheit 50 kann der Elektromotor 14 galvanisch von der Steuerungsvorrichtung 16 getrennt werden. Die Trenneinheit 50 weist beispielsweise ein Relais oder ein Schütz zur galvanischen Trennung von Elektromotor 14 und Steuerungsvorrichtung 16 auf.

Mittels der Pulsweitenmodulationseinheit 58 der Steuereinheit 36 werden in Abhängigkeit von der Gleichrichter-Ausgangsspannung Pulsweitenmodulationssignale erzeugt, mit denen die Schalteinheit 46 angesteuert wird.

Mittels der Zeit- und Stromüberwachungseinheit 62 der Steuereinheit 36 wird der von der Strommesseinheit 48 erfasste Motorstrom ausgewertet. Dabei werden eine Amplitude des Motorstroms und eine Zeitdauer, während der der Motorstrom fließt, ermittelt.

Mittels der Abschalteinheit 60 der Steuereinheit 36 wird der Motorstrom über die Schalteinheit 46 abgeschaltet, wenn die Amplitude des Motorstroms einen vorgegebenen Amplituden-Schwellenwert überschreitet, oder wenn die Zeitdauer, während der der Motorstrom fließt, einen vorgegebenen Zeitschwellenwert überschreitet.

Über die Eingangsbaugruppe 64 der Steuereinheit 36 können der Steuereinheit 36 Eingangssignale von wenigstens einem (bezüglich der Steuerungsvorrichtung) externen Gerät zugeführt werden. Insbesondere können der Steuereinheit 36 über die Eingangsbaugruppe 64 Eingangssignale von dem Endlagenschalter 32 zugeführt werden. In Abhängigkeit von Eingangssignalen wird von der Eingangsbaugruppe 64 die galvanische Trenneinheit 50 aktiviert, um den Elektromotor 14 galvanisch von der Steuerungsvorrichtung 16 zu trennen.

Über die Ausgangsbaugruppe 66 können von der Steuereinheit 36 Ausgangssignale an wenigstens ein externes Gerät abgegeben werden. Mit einem Ausgangssignal wird beispielsweise ein Zustand des Elektromotors 14 und/oder ein Zustand der Steuerungsvorrichtung 16 und/oder ein Zustand des Schalterantriebs 10 übermittelt.

Es ergeben sich folgende Funktion und folgende Vorteile:
Anstelle der Trennung der Steuereinheit (des Vorschaltgerätes) 36, der Energieversorgungseinrichtung (des Netzteils) 34 und des Elektromotors 14, werden der Elektromotor 14 und mindestens eine der beiden anderen Baugruppen in einem Modul räumlich-strukturell zusammengefasst. Somit wird die Energieversorgungseinrichtung (das Netzteil) 54, 56 für die Steuereinheit 36 aus der Gleichrichter-Ausgangsspannung, also der Zwischenkreisspannung, gespeist bzw. durch eine elektronische Schaltung ersetzt, die die Steuereinheit 36 mit der erforderlichen Spannung vorsorgt.

Die weitere Spannungsmesseinheit 54 bestimmt die Höhe der Zwischenkreisspannung und passt diese durch die als Umformer ausgebildete weitere Schalteinheit 56 an die Anforderungen der Steuereinheit 36 an. Dadurch wird erreicht, dass beim Einschalten der Versorgungsspannung nicht nur der Elektromotor 14 versorgt wird, sondern auch die Steuereinheit 36, die die Motorversorgungsspannung an die Anforderungen des Elektromotors 14 anpasst. Der Einschaltvorgang der Motorversorgungsspannung erfolgt durch den als Motorendschalter ausgebildeten Endlagenschalter 32.

Weiterhin werden Kühlflächen von zumindest einem leistungsübertragenden elektronischen Bauelement, z.B. der galvanischen Trenneinheit 50, mit den mechanischen Motor- bzw. Motorgehäusebauteilen 72 verbunden. Somit werden die mechanischen Komponenten des Motors/Motorgehäuses 72 als Kühlelemente verwendet.

Durch diese Kombination ist es möglich die kompletten elektronischen Baugruppen 34, 36 der Steuerungsvorrichtung 16 in das Motorgehäuse 38 zu integrieren, sodass der Anschluss 70 für die Motorversorgungsspannung die einzig verbleibende elektrische Schnittstelle der Motorvorrichtung 12 zur Leistungsschaltersteuerung darstellt. Weitere mögliche Schnittstellen sind dann lediglich optional.

### Bezugszeichenliste:

- 10: Schalterantrieb
- 12: Motorvorrichtung
- 14: Elektromotor
- 16: Steuerungsvorrichtung
- 18: Feder
- 20: Spannrad
- 22: Kopplungselement
- 24: Verriegelungseinheit
- 26: Auslöseeinheit
- 28: Getriebe
- 30: Drehachse
- 32: Endlagenschalter
- 34: Energieversorgungseinrichtung (Netzteil)
- 36: Steuereinheit
- 38: Motorgehäuse
- 40: Gleichrichtereinheit
- 42: Zwischenkreis
- 44: Spannungsmesseinheit
- 46: Schalteinheit
- 48: Strommesseinheit
- 50: galvanische Trenneinheit
- 52: Anschluss der Steuereinheit
- 54: weitere Spannungsmesseinheit
- 56: weitere Schalteinheit
- 58: Pulsweitenmodulationseinheit
- 60: Abschalteinheit
- 62: Zeit- und Stromüberwachung
- 64: Eingangsbaugruppe
- 66: Ausgangsbaugruppe
- 68: Versorgungsspannungsquelle
- 70: Anschluss der Motorbaugruppe
- 72: Komponente Motor/Motorgehäuse

## Patentansprüche

1. Motorvorrichtung (12) für einen Schalterantrieb (10) eines elektrischen Schalters, mit einem Elektromotor (14) und einer Steuerungsvorrichtung (16) zur Steuerung des Elektromotors (14), wobei die Steuerungsvorrichtung (16)
- eine Energieversorgungseinrichtung (34) zur elektrischen Energieversorgung des Elektromotors (14), mit
- einer Gleichrichtereinheit (40),
- einer Spannungsmesseinheit (44) zur Erfassung der Versorgungsspannung oder einer Gleichrichter-Ausgangsspannung der Gleichrichtereinheit (40) und
- einer Schalteinheit (46) zur Erzeugung einer Antriebsspannung für den Elektromotor (14) aus der Versorgungsspannung oder aus der Gleichrichter-Ausgangsspannung sowie
- eine Steuereinheit (36) zur Ansteuerung der Schalteinheit (46) in Abhängigkeit von der erfassten Versorgungs- oder Gleichrichter-Ausgangsspannung aufweist,
wobei
die Energieversorgungseinrichtung (34) eine Energieversorgungseinrichtung (34) zur elektrischen Energieversorgung des Elektromotors (14) und der Steuereinheit (36) ist,
**dadurch gekennzeichnet, dass** die Energieversorgungseinrichtung (34) zur elektrischen Energieversorgung der Steuereinheit (36)
- eine weitere Spannungsmesseinheit (54) zur Erfassung der Versorgungsspannung oder einer Gleichrichter-Ausgangsspannung der Gleichrichtereinheit (40) und
- eine weitere Schalteinheit (56) zur Erzeugung einer Versorgungsspannung für die Steuereinheit (36) aus der Versorgungsspannung oder aus der Gleichrichter-Ausgangsspannung aufweist;
und mit einem Motorgehäuse (38), welches neben dem Elektromotor (14) zumindest einen Teil der Energieversorgungseinrichtung (34) und/ oder zumindest einen Teil der Steuereinheit (36) einhaust.

2. Motorvorrichtung nach Anspruch 1,
**dadurch gekennzeichnet, dass** die Schalteinheit (46) und/oder die weitere Schalteinheit (56) der Gleichrichtereinheit (40) nachgeschaltet ist.

3. Motorvorrichtung nach einem der Ansprüche 1 oder 2,
**dadurch gekennzeichnet, dass**
die Steuerungsvorrichtung (16) eine Strommesseinheit (48) zur Erfassung eines zwischen der Schalteinheit (46) und dem Elektromotor (14) fließenden Motorstroms aufweist.

4. Motorvorrichtung nach einem der Ansprüche 1 bis 3,
**dadurch gekennzeichnet, dass**
die Steuerungsvorrichtung (16) eine galvanische Trenneinheit (50) zur galvanischen Trennung des Elektromotors (14) von dem Rest der Steuerungsvorrichtung (16) aufweist.

5. Motorvorrichtung nach einem der vorhergehenden Ansprüche, **dadurch gekennzeichnet, dass**
zumindest eines der leistungsübertragenden elektrischen Bauelemente der Steuerungsvorrichtung (16), insbesondere die galvanische Trenneinheit (50), wärmeleitend mit einer Komponente (72) des Elektromotors (14) und/oder einer Komponente (72) des Motorgehäuses (38) verbunden ist.

6. Motorvorrichtung nach einem der vorhergehenden Ansprüche, **dadurch gekennzeichnet, dass**
die Steuereinheit (36) eine Eingangsbaugruppe (64) aufweist, über die der Steuereinheit (36) Eingangssignale wenigstens eines externen Gerätes zuführbar sind oder zugeführt werden.

7. Motorvorrichtung nach Anspruch 6,
**dadurch gekennzeichnet, dass**
der Steuereinheit (36) über die Eingangsbaugruppe (64) Eingangssignale eines Endlagenschalters (32) zur Erfassung einer Endstellung des Schalterantriebs (10) zugeführt werden.

8. Motorvorrichtung nach einem der vorhergehenden Ansprüche, **dadurch gekennzeichnet, dass**
die Steuereinheit (36) eine Ausgangsbaugruppe (66) aufweist, über die von der Steuereinheit (36) Ausgangssignale an wenigstens ein externes Gerät abgegeben werden.

## Claims

1. Motor apparatus (12) for a switch drive (10) of an electrical switch, having an electric motor (14) and a control apparatus (16) for controlling the electric motor (14), wherein the control apparatus (16) has
- an energy supply device (34) for supplying electrical energy to the electric motor (14), having
- a rectifier unit (40),
- a voltage measuring unit (44) for measuring the supply voltage or a rectifier output voltage of the rectifier unit (40) and
- a switching unit (46) for producing a drive voltage for the electric motor (14) from the supply voltage or from the rectifier output voltage, and
- a control unit (36) for controlling the switching unit (46) on the basis of the measured supply voltage or rectifier output voltage,
wherein
the energy supply device (34) is an energy supply device (34) for supplying electrical energy to the electric motor (14) and the control unit (36), **characterized in that** for the purpose of supplying electrical energy to the control unit (36) the energy supply device (34) has
- a further voltage measuring unit (54) for measuring the supply voltage or a rectifier output voltage of the rectifier unit (40) and
- a further switching unit (56) for producing a supply voltage for the control unit (36) from the supply voltage or from the rectifier output voltage;
and having a motor housing (38) that, in addition to the electric motor (14), houses at least a part of the energy supply device (34) and/or at least a part of the control unit (36) .

2. Motor apparatus according to Claim 1,
**characterized in that**
the switching unit (46) and/or the further switching unit (56) is connected downstream of the rectifier unit (40).

3. Motor apparatus according to either of Claims 1 and 2, **characterized in that**
the control apparatus (16) has a current measuring unit (48) for measuring a motor current flowing between the switching unit (46) and the electric motor (14).

4. Motor apparatus according to one of Claims 1 to 3,
**characterized in that**
the control apparatus (16) has a DC isolation unit (50) for the DC isolation of the electric motor (14) from the rest of the control apparatus (16).

5. Motor apparatus according to one of the preceding claims, **characterized in that**
at least one of the power-transmitting electrical elements of the control apparatus (16), in particular the DC isolation unit (50), is connected to a component (72) of the electric motor (14) and/or to a component (72) of the motor housing (38) in a thermally conductive manner.

6. Motor apparatus according to one of the preceding claims, **characterized in that**
the control unit (36) has an input assembly (64), by means of which input signals from at least one external device can be supplied or are supplied to the control unit (36).

7. Motor apparatus according to Claim 6,
**characterized in that**
input signals from a limit switch (32) for detecting an end position of the switch drive (10) are supplied to the control unit (36) by means of the input assembly (64).

8. Motor apparatus according to one of the preceding claims, **characterized in that**
the control unit (36) has an output assembly (66), by means of which output signals are delivered to at least one external device by the control unit (36).

## Revendications

1. Installation (12) motrice pour l'entraînement (10) d'un interrupteur électrique, comprenant un moteur (14) électrique et une installation (16) de commande pour la commande du moteur (14) électrique, dans laquelle l'installation (16) de commande comprend
- un dispositif (34) d'alimentation en énergie pour l'alimentation en énergie électrique du moteur (14) électrique, avec
- une unité (40) de redresseur,
- une unité (44) de mesure de la tension pour la détection de la tension d'alimentation ou d'une tension de sortie de l'unité (40) de redresseur, et
- une unité (46) de coupure pour la production d'une tension d'entraînement du moteur (14) électrique, à partir de la tension d'alimentation ou de la tension de sortie du redresseur, ainsi que
- une unité (36) de commande pour la commande de l'unité (46) de coupure en fonction de la tension d'alimentation ou de la tension de sortie du redresseur détectée,
dans laquelle le dispositif (34) d'alimentation en énergie est un dispositif (34) d'alimentation en énergie pour l'alimentation en énergie électrique du moteur (14) électrique et de l'unité (36) de commande, **caractérisée en ce que**
le dispositif (34) d'alimentation en énergie pour l'alimentation en énergie électrique de l'unité (36) de commande comprend
- une autre unité (54) de mesure de la tension pour la détection de la tension d'alimentation ou d'une tension de sortie de redresseur de l'unité (40) de redresseur, et
- une autre unité (56) de coupure pour la production d'une tension d'alimentation de l'unité (36) de commande, à partir de la tension d'alimentation ou de la tension de sortie du redresseur ;
et comprenant une carcasse (38) de moteur, qui loge, outre le moteur (14) électrique, au moins une partie du dispositif (34) d'alimentation en énergie et/ou au moins une partie de l'unité (36) de commande.

2. Installation motrice suivant la revendication 1,
**caractérisée en ce que**
l'unité (46) de coupure et/ou l'autre unité (56) de coupure est montée en aval de l'unité (40) de redresseur.

3. Installation motrice suivant l'une des revendications 1 ou 2,
**caractérisée en ce que**
l'installation (16) de commande comprend une unité (48) de mesure du courant pour la détection d'un courant du moteur passant entre l'unité (46) de coupure et le moteur (14) électrique.

4. Installation motrice suivant l'une des revendications 1 à 3,
**caractérisée en ce que**
l'installation (16) de commande comprend une unité (50) de séparation galvanique pour la séparation galvanique du moteur (14) électrique du reste de l'installation (16) de commande.

5. Installation motrice suivant l'une des revendications précédentes,
**caractérisée en ce qu'**
au moins l'un des composants électriques transmettant la puissance de l'installation (16) de commande, en particulier l'unité (50) de séparation galvanique, est reliée d'une manière conductrice de la chaleur à un composant (72) du moteur (14) électrique et/ou un composant (72) de la carcasse (38) du moteur.

6. Installation motrice suivant l'une des revendications précédentes,
**caractérisée en ce que**
l'unité (36) de commande comporte un module (64) d'entrée, par lequel les signaux d'entrée d'au moins un appareil extérieur sont envoyés à l'unité (36) de commande ou peuvent l'être.

7. Installation motrice suivant la revendication 6,
**caractérisée en ce qu'**
il est envoyé à l'unité (36) de commande, par le module (64) d'entrée, des signaux d'entrée d'un interrupteur (32) de position finale pour la détection d'une position finale de l'entraînement (10) de l'interrupteur.

8. Installation motrice suivant l'une des revendications précédentes,
**caractérisée en ce que**
l'unité (36) de commande a un module (66) de sortie, par lequel les signaux de sortie de l'unité (36) de commande peuvent être donnés à au moins un appareil extérieur.
